## Europäisches Patentamt
## European Patent Office
## Office européen des brevets

(19)

(11) Veröffentlichungsnummer: **0 198 812 B1**

(12) **EUROPÄISCHE PATENTSCHRIFT**

(45) Veröffentlichungstag der Patentschrift:
**22.02.89**

(21) Anmeldenummer: **86890052.3**

(22) Anmeldetag: **10.03.86**

(51) Int. Cl.⁴: **B60K 17/34**

(54) Antriebsanordnung für Kraftfahrzeuge mit wenigstens zwei Triebachsen.

(30) Priorität: **02.04.85 AT 981/85**

(43) Veröffentlichungstag der Anmeldung:
**22.10.86 Patentblatt 86/43**

(45) Bekanntmachung des Hinweises auf die Patenterteilung:
**22.02.89 Patentblatt 89/8**

(84) Benannte Vertragsstaaten:
**BE CH DE FR GB IT LI NL SE**

(56) Entgegenhaltungen:
**AT-B- 378 046**
**DE-A- 3 334 905**
**DE-A- 3 401 628**
**DE-B- 2 629 362**
**GB-A- 887 849**

(73) Patentinhaber: **STEYR-DAIMLER-PUCH**
**Aktiengesellschaft, Postfach 62 Franz-Josefs-Kai 51,**
**A-1011 Wien(AT)**

(72) Erfinder: **Friedrich, Karl, Seggauberg 5,**
**A-8430 Leibnitz(AT)**

## Beschreibung

Die Erfindung betrifft eine Antriebsanordnung für Kraftfahrzeuge mit wenigstens zwei Triebachsen, einem quer zur Fahrtrichtung liegenden Motor und einem zur Motorwelle parallelachsigen Wechselgetriebe, das über einen Stirnradtrieb die Triebachse und über einen mit diesem Stirnradtrieb verbundenen ersten Winkeltrieb, eine Gelenkwelle und einen zweiten Winkeltrieb die andere Triebachse antreibt.

Bei einer bekannten derartigen Antriebsanordnung (GB-A 887 849) ist der Achsabstand zwischen dem getriebenen Rad des Stirnradtriebes bzw. dem treibenden Kegelrad des ersten Winkeltriebes vom Gehäuse des Stirnradwechselgetriebes verhältnismäßig groß. Es kann daher auch der Radius des treibenden Kegelrades des ersten Winkeltriebes entsprechend groß gewählt werden, und es ergibt sich dementsprechend ein vergleichsweise kleiner Durchmesser des Trieblings des zweiten Winkeltriebes. Es müssen ja das treibende Rad zum getriebenen Rad des ersten Winkeltriebes im umgekehrten Verhältnis wie der Triebling und das getriebene Rad des zweiten Winkeltriebes stehen, um zwischen den beiden Triebachsen keine Drehzahldifferenz zu erhalten. Nun ist es aber aus baulichen Gründen nicht immer möglich, zwischen der Achse des Stirnradtriebes bzw. des ersten Winkeltriebes und dem Wechselgetriebe einen größeren Abstand einzuhalten. In diesem Fall muß das treibende Kegelrad des ersten Winkeltriebes in seinem Durchmesser verringert werden, was dann in ungünstiger Weise eine wesentliche Vergrößerung des Durchmessers des zweiten Winkeltriebes zur Folge hat. Gerade hier will man aber mit einem Triebling möglichst kleinen Durchmessers das Auslangen finden.

Somit liegt der Erfindung die Aufgabe zugrunde, diesen Mangel zu beseitigen und eine Antriebsanordnung der eingangs geschilderten Art zu schaffen, bei der die Achse des Stirnradtriebes bzw. des ersten Winkeltriebes ganz nahe an das Wechselgetriebe herangelegt werden kann, ohne eine Vergrößerung des Trieblings des zweiten Winkeltriebes in Kauf nehmen zu müssen, wobei es sich insgesamt um eine kompakte Konstruktion handeln soll.

Die Erfindung löst die gestellte Aufgabe dadurch, daß zwischen dem ersten Winkeltrieb und der Gelenkwelle ein Planetengetriebe eingebaut ist.

Durch dieses Planetengetriebe ergibt sich zwischen dem ersten Winkeltrieb und dem zweiten Winkeltrieb eine Übersetzungsstufe, die es ermöglicht, das Übersetzungsverhältnis des zweiten Winkeltriebes anders zu wählen als jenes des ersten Winkeltriebes, d.h. es kann das treibende Kegelrad des ersten Winkeltriebes verkleinert werden, ohne gleichzeitig den Radius des Trieblings des zweiten Winkeltriebes vergrößern zu müssen. Dabei hat das Planetengetriebe gegenüber einer anderen Getriebeausbildung noch den Vorteil, daß der An- und Abtrieb gleichachsig liegen und daß alle Getriebeglieder in einer Ebene angeordnet sind, also in Richtung der Gelenkwellenachse sehr wenig Platz beanspruchen.

Eine besonders zweckmäßige Konstruktion wird dadurch erreicht, daß am getriebenen Kegelrad des ersten Winkeltriebes der Planetenradträger des Planetengetriebes unmittelbar befestigt ist, dessen Außenrad mit dem gemeinsamen Gehäuse für den Winkeltrieb und das Planetengetriebe in drehfester Verbindung steht und von dessen Sonnenrad der Gelenkwellenantrieb abgenommen ist. Es wird also dabei für das Planetengetriebe und dem Winkeltrieb nur ein Gehäuse verwendet und zwischen diesen beiden Trieben der kürzestmögliche Abstand erreicht.

Vorteilhaft ist es auch, wenn an das Planetengetriebe eine Flüssigkeitsreibungskupplung unmittelbar anschließt, deren eine Schar von Lamellen tragendes, im Planetenradträger des Planetengetriebes gelagertes Gehäuse mit der Gelenkwelle verbunden und deren die andere Lamellenschar tragender, in das Gehäuse einragender Innenteil mit dem Sonnenrad gekuppelt ist. Eine solche Flüssigkeitsreibungskupplung wirkt als selbständige Kupplung, sie kuppelt nämlich die Gelenkwelle mit dem Sonnenrad des Planetengetriebes, wenn zwischen den beiden Teilen und damit auch den beiden Triebachsen eine Drehzahldifferenz auftritt, u.zw. wird das durch die Kupplung übertragbare Drehmoment umso größer, je größer die Drehzahldifferenz ist. Dagegen wird bei erreichtem Gleichlauf praktisch kein Drehmoment übertragen.

Es ist zwar bereits bekannt, bei einem Kraftfahrzeug mit zwei Triebachsen im Antriebsstrang zu der einen Triebachse eine Flüssigkeitsreibungskupplung vorzusehen, jedoch handelt es sich dabei um eine Anordnung ohne zusätzliches Planetengetriebe und ohne unmittelbaren Anschluß an den ersten Winkeltrieb.

Eine für die Montage und Demontage besonders günstige Konstruktion wird dadurch erreicht, daß das gemeinsame Gehäuse für den ersten Winkeltrieb und das Planetengetriebe einen zugleich als Trennwand gegenüber einem die Flüssigkeitsreibungskupplung umschließenden Gehäuse dienenden Deckel besitzt, in dem der Planetenradträger gelagert ist.

Um die Abmessungen in Fahrtrichtung weiter zu verringern, kann das die eine Lamellenschar tragende Gehäuse der Flüssigkeitsreibungskupplung zugleich einen Gelenkwellen-Anschlußflansch bilden.

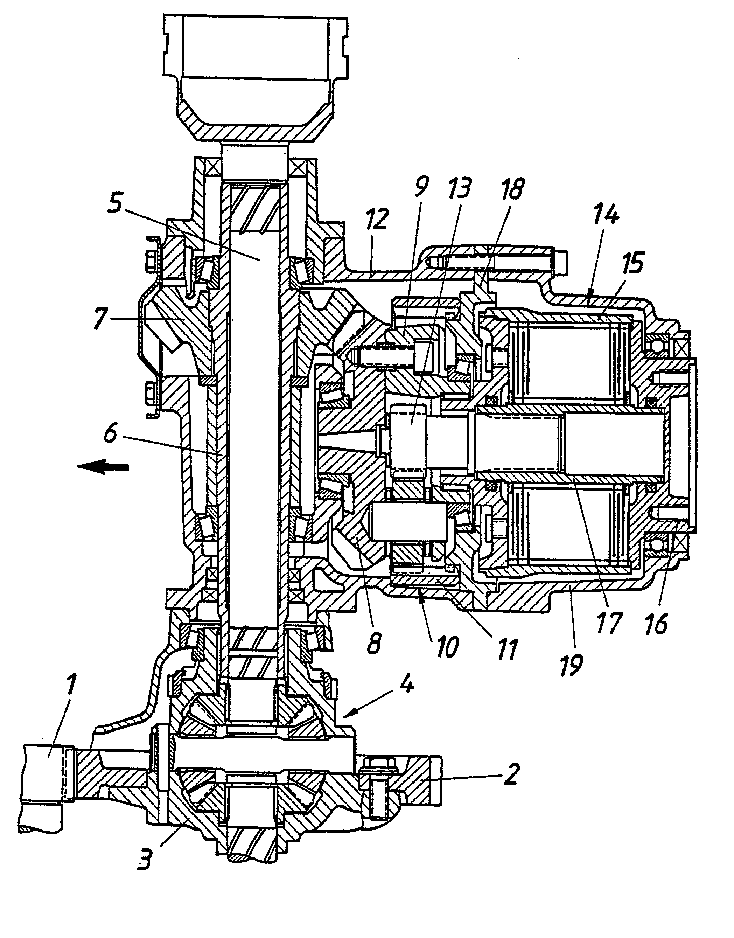

Die Zeichnung zeigt als Ausführungsbeispiel eine Antriebsanordnung für ein Kraftfahrzeug mit wenigstens zwei Triebachsen im Schnitt.

Der (nicht dargestellte) Motor liegt quer zu der durch einen Pfeil angegebenen Fahrtrichtung. Von dem zur Motorwelle parallelachsigen, also ebenfalls quer zur Fahrtrichtung liegenden Geschwindigkeitswechselgetriebe ist nur das Abtriebsritzel 1 dargestellt, das mit einem Stirnrad 2 kämmt. Das Stirnrad 2 ist am Getriebegehäuse 3 des Ausgleichgetriebes 4 der Triebachse 5 befestigt. Mit dem Ausgleichgetriebegehäuse 3 ist aber auch eine Hohlwelle 6 drehfest verbunden, auf der das treibende Kegelrad 7 eines ersten Winkeltriebes sitzt. Am getriebenen Kegelrad 8 dieses Winkeltriebes 7, 8 ist der Planetenradträger 9 eines insgesamt mit 10 bezeichneten Planetengetriebes unmittelbar befestigt. Das Außenrad 11 des Planetengetriebes 10 steht in drehfester Verbindung mit dem gemeinsamen Gehäuse 12 für den Winkeltrieb 7, 8 und das Planetengetriebe 10. Vom Sonnenrad 13 des Planetengetriebes 10 wird der Antrieb für die zweite Getriebeachse abgenommen.

An das Planetengetriebe 10 schließt eine allgemein mit 14 bezeichnete Flüssigkeitsreibungskupplung an, wobei deren Gehäuse 15 die eine Schar von Lamellen trägt, im Planetenradträger 9 des Planetengetriebes 10 einerseits gelagert ist und anderseits einen Flansch 16 für den Anschluß einer nicht dargestellten Gelenkwelle bildet, die über einen zweiten Winkeltrieb die andere Triebachse antreibt. Der die andere Lamellenschar tragende Innenteil 17 der Flüssigkeitsreibungskupplung 14 ist drehfest mit der Welle des Sonnenrades 13 verbunden. Das gemeinsame Gehäuse 12 für den ersten Winkeltrieb 7, 8 und das Plantengetriebe 10 besitzt einen Deckel 18, der zugleich als Trennwand gegenüber dem die Flüssigkeitsreibungskupplung 14 umschließenden Gehäuse 19 dient. In dieser Trennwand bzw. in diesem Deckel 18 ist auch der Planetenradträger 9 des Planetengetriebes 10 gelagert.

Der Antrieb der einen Triebachse 5 erfolgt vom Stirnradtrieb 1, 2 über das Ausgleichgetriebe 4, wogegen für den Antrieb der anderen Triebachse die Hohlwelle 6, der erste Winkeltrieb 7, 8, das Planetengetriebe 9, die Flüssigkeitsreibungskupplung 14, die Gelenkwelle und der zweite Winkeltrieb dienen. Dabei treibt das Kegelrad 8 den Planetenradträger 9 an, das Außenrad 11 des Planetengetriebes 10 ist festgehalten und der Abtrieb erfolgt vom Sonnenrad 13 auf den Innenteil 17 der Flüssigkeitsreibungskupplung 14, deren die andere Schar von Lamellen tragendes Gehäuse 15 über den Flansch 16 die nicht dargestellte Gelenkwelle zur anderen Triebachse antreibt.

## Patentansprüche

1. Antriebsanordnung für Kraftfahrzeuge mit wenigstens zwei Triebachsen, einem quer zur Fahrtrichtung liegenden Motor und einem zur Motorwelle parallelachsigen Wechselgetriebe, das über einen Stirnradtrieb (1, 2) die eine Triebachse (5) und über einen mit diesem Stirnradtrieb verbundenen ersten Winkeltrieb (7, 8), eine Gelenkwelle und einen zweiten Winkeltrieb die andere Triebachse antreibt, dadurch gekennzeichnet, daß zwischen dem ersten Winkeltrieb (7, 8) und der Gelenkwelle ein Planetengetriebe (10) eingebaut ist.

2. Antriebsanordnung nach Anspruch 1, dadurch gekennzeichnet, daß am getriebenen Kegelrad (8) des ersten Winkeltriebes (7, 8) der Planetenradträger (9) des Planetengetriebes (10) unmittelbar befestigt ist, dessen Außenrad (11) mit dem gemeinsamen Gehäuse (12) für den Winkeltrieb (7, 8) und das Planetengetriebe (10) in drehfester Verbindung steht und von dessen Sonnenrad (13) der Gelenkwellenantrieb abgenommen ist.

3. Antriebsanordnung nach den Ansprüchen 1 und 2, dadurch gekennzeichnet, daß an das Planetengetriebe (10) eine Flüssigkeitsreibungskupplung (14) unmittelbar anschließt, deren eine Schar von Lamellen tragendes, im Planetenradträger (9) des Planetengetriebes (10) gelagertes Gehäuse (15) mit der Gelenkwelle verbunden und deren die andere Lamellenschar tragender, in das Gehäuse (15) einragender Innenteil (17) mit dem Sonnenrad (13) gekuppelt ist.

4. Antriebsanordnung nach den Ansprüchen 1 bis 3, dadurch gekennzeichnet, daß das gemeinsame Gehäuse (12) für den ersten Winkeltrieb (7, 8) und das Planetengetriebe (10) einen zugleich als Trennwand gegenüber einem die Flüssigkeitsreibungskupplung (14) umschließenden Gehäuse (19) dienenden Deckel (18) besitzt, in dem der Planetenradträger (9) gelagert ist.

5. Antriebsanordnung nach den Ansprüchen 1 bis 4, dadurch gekennzeichnet, daß das die eine Lamellenschar tragende Gehäuse (15) der Flüssigkeitsreibungskupplung (14) zugleich einen Gelenkwellen-Anschlußflansch (16) bildet.

## Claims

1. A drive system for motor vehicles having at least two driven axles, comprising an engine, which extends transversely to the direction of travel, and a gearbox, which has an axis that is parallel to the motor shaft and via a spur gear train (1, 2) drives one (5) of the driven axles and via a first angle drive (7, 8), which is connected to that spur gear train, a universal joint shaft and a second angle drive drives the other driven axle, characterized in that a planetary gear train (10) is incorporated between the first angle drive (7, 8) and the universal joint shaft.

2. A drive system according to claim 1, characterized in that the planet carrier (9) of the planetary gear train (10) is directly secured to the driven bevel gear (8) of the first angle drive (7, 8), the ring gear (11) of the planetary gear train is non-rotatably connected to the common housing (12) for the angle drive (7, 8) and the planetary gear train (10), and the sun gear (13) of the planetary gear train drives the universal joint shaft.

3. A drive system according to claims 1 and 2, characterized in that the planetary gear train (10) is directly succeeded by a liquid friction coupling (14), which comprises a housing (15) that carries one set of blades and is movably mounted in the planet carrier (9) of the planetary gear train (10) and is connected to the universal joint shaft whereas the inner part (17) of the friction coupling carries the other set of blades and protrudes into the housing (15) and is coupled to the sun gear (13).

4. A drive system according to claims 1 to 3, characterized in that the common housing (12) for the first angle drive (7, 8) and the planetary gear train (10) comprises a cover (18), which constitutes a partition for a separation from a housing (19) that encloses the liquid friction coupling (14), and the planet carrier (9) is movably mounted in that cover.

5. A drive system according to claims 1 to 4, characterized in that the housing (15) of the liquid friction coupling (14), which housing carries one set of blades, also constitutes a flange (16) that is connected to the universal joint shaft.

## Revendications

1. Dispositif de transmission pour véhicule automobile avec au moins deux essieux moteurs, un moteur transversal au sens de la marche, et une boîte de vitesse à axes parallèles à l'arbre du moteur, qui entraînent un essieu (5) par l'intermédiaire d'une transmission à pignons droits (1, 2) et l'autre essieu par l'intermédiaire d'un premier renvoi d'angle (7, 8) relié à cette transmission à pignons droits, d'un arbre moteur et d'un second renvoi d'angle, caractérisé en ce qu'un train épicycloïdal (10) est monté entre le premier renvoi d'angle (7, 8) et l'arbre de transmission.

2. Dispositif selon la revendication 1 caractérisé en ce qu'à la roue conique menée (8) du premier renvoi d'angle (7, 8) est fixé directement le porte-satellites (9) du train épicycloïdal (10) dont la roue extérieure (11) est solidement calée en rotation avec un carter (12) commun au renvoi d'angle (7, 8) et au train épicycloïdal (10) et à partir de la roue planétaire (13) duquel est reçue la commande de la transmission.

3. Dispositif selon les revendications 1 et 2 caractérisé en ce qu'au train épicycloïdal (10) est réuni directement un accouplement hydraulique à friction (14) dont une enveloppe (15) portant un ensemble de disques est supportée et guidée dans le porte-satellites (9) du train épicycloïdal (10) et reliée à l'arbre moteur et dont la pièce intérieure (17) portant l'autre ensemble de disques et saillante à l'intérieur de l'enveloppe (15) est accouplée avec la roue planétaire (13).

4. Dispositif selon les revendications 1 à 3 caractérisé en ce que le carter (12) commun au premier renvoi d'angle (7, 8) et au train épicycloïdal (10) possède un couvercle (18) servant également de cloison de séparation vis-à-vis du carter (19) contenant l'accouplement hydraulique à friction (14), par laquelle est supporté et guidé le porte-satellites (9).

5. Dispositif selon les revendications 1 à 4 caractérisé en ce que l'enveloppe (15) portant un ensemble de disques de l'accouplement hydraulique à friction constitue aussi une bride (16) d'accouplement de l'essieu moteur.

EP 0 198 812 B1